# EUROPÄISCHE PATENTSCHRIFT

(11) **EP 1 301 985 B1**
(45) Veröffentlichungstag und Bekanntmachung des Hinweises auf die Patenterteilung: **09.12.2009**
(21) Anmeldenummer: 01949092.9
(22) Anmeldetag: 05.07.2001
(51) Int. Cl.: H02M 3/335, H02M 1/00

(54) **VERFAHREN ZUM ERKENNEN UND/ODER BEGRENZEN VON KURZSCHLUSSZUSTÄNDEN EINES SCHALTWANDLERS UND SCHALTWANDLER**
METHOD FOR RECOGNITION AND/OR LIMITING THE SHORT-CIRCUIT STATE OF A SWITCHING CONVERTER AND SWITCHING CONVERTER
PROCEDE DE DETECTION ET/OU DE LIMITATION DE COURTS-CIRCUITS D'UN CONVERTISSEUR A COMMUTATION ET LEDIT CONVERTISSEUR A COMMUTATION

(30) Priorität: 14.07.2000 AT 122900
(43) Veröffentlichungstag der Anmeldung: 16.04.2003
(73) Patentinhaber: Siemens AG Österreich, 1210 Wien (AT)
(72) Erfinder: KRANISTER, Andreas, A-3150 Wilhelmsburg (AT); SCHWEIGERT, Harald, A-1120 Wien (AT)
(74) Vertreter: Maier, Daniel Oliver
(86) Internationale Anmeldenummer: PCT/AT2001/000221
(87) Internationale Veröffentlichungsnummer: WO 2002/007295

(56) Entgegenhaltungen:
- DE-A- 19 711 771
- DE-A- 19 730 220
- US-A- 5 757 214
- US-A- 5 757 625
- US-A- 6 016 260

## Beschreibung

Die Erfindung bezieht sich auf ein Verfahren zum Erkennen und/oder Begrenzen von Kurzschluss- oder Überstromzuständen eines Schaltwandlers, bei welchem der Laststrom oder eine diesem proportionale Größe gemessen und mit einem vorgebbaren Maximalwert verglichen wird und das Ergebnis dieses Vergleichs zur Beeinflussung der Schaltimpulse herangezogen wird.

Ebenso bezieht sich die Erfindung auf einen Schaltwandler zur Umschaltung einer Eingangsgleichspannung in eine Ausgangsspannung, bei welcher die Eingangsspannung über zumindest einen, von einer Ansteuerschaltung mit Schaltimpulsen angesteuerten Schalter an eine Induktivität schaltbar ist, und der Schaltwandler dazu eingerichtet ist, bei Überschreiten eines vorgebbaren Maximalwertes des Laststroms die Schaltimpulse im Sinne einer Laststromversorgung zu beeinflussen.

Schaltwandler oder Schaltnetzteile sind in einer großen Vielfalt von Ausführungsformen, sei es als Flusswandler, sei es als Sperrwandler, bekannt geworden Die von einem gesteuerten Schalter angesteuerte Induktivität kann mit der Ausgangsseite in galvanischer Verbindung stehen, doch werden meist Übertrager verwendet, und der Strom durch eine Primärwicklung wird durch einen gesteuerten Schalter getaktet. Die Ansteuerschaltung enthält beispielsweise einen Pulsweitenmodulator, dessen Tastverhältnis zum Zwecke der Regelung, beispielsweise auf konstante Ausgangsspannung, meist geändert werden kann.

Ein Problem bei Schaltwandlern bieten ausgangsseitige Kurzschlüsse oder ähnliche Überstromzustände. Durch Sensoren kann der Laststrom oder eine andere, dem Laststrom proportionale elektrische Größe gemessen und gleichfalls zur Regelung über die Ansteuerschaltung herangezogen werden. Im Kurzschlussfall müsste das Tastverhältnis der Schaltimpulse extrem klein eingestellt werden, um einen stabilen Zustand bei nur geringfügiger Ausgangsstromerhöhung zu erreichen, z. B. gleiche Spannungs-Zeit-lFlächen beim Auf- und Abmagnetisieren einer Sekundärdrossel eines Durchflusswandlers. Anderenfalls werden Bauteile, wie Gleichrichterdioden, Freilaufdioden, etc. thermisch überlastet und zerstört, wobei auch Sicherheitsprobleme auftreten können. Dazu kommt, dass bei Regelung auf konstante Ausgangsspannung der Regler im Kurzschlussfall, d. h. bei Absinken der Ausgangsspannung fast auf Null, ein volles Tastverhältnis einzustellen versucht, um die Ausgangsspannung aufrecht zu erhalten.

Eine bekannte Lösung der Kurzschlussprobleme sieht eine sekundäre Stromregelung mit einem Shunt als Stromsensor vor. Dazu sind jedoch teure Operationsverstärker mit niedriger Offset-Spannung erforderlich, und bei hohen Strömen müsste wegen der Verluste am Shunt statt dessen ein teurer Stromwandler eingesetzt werden. Überdies benötigt man einen weiteren Optokoppler zur sicheren galvanischen Trennung von Primär- und Sekundärbeschaltung, wodurch vor allem bei hohen Eingangsspannungen weitere Kosten entstehen.

Man kann natürlich die Bauelemente so dimensionieren, dass sie - bis zum Auslösen einer herkömmlichen Sicherung - nicht zerstört werden, doch ist dies aus Kostengründen selten realisierbar.

Eine andere bekannte Lösung sieht vor, den Stromverbrauch der Ansteuerschaltung relativ hoch zu halten und sie aus einer Hilfswicklung des Übertragers zu speisen. Im Kurzschlussfall bricht dann die Stromversorgung der Ansteuerschaltung zusammen und die Schaltimpulse setzen aus, bis die Schaltung wieder langsam abläuft. Hier ergeben sich jedoch Probleme bei der Versorgung der Schaltung im Leerlauf, es wird nur ein Mittelwert des Laststromes begrenzt und nicht dessen Momentanwert, und ein Parallelschalter mehrerer Schaltwandler führt gleichfalls zu Problemen.

Weiters hat es sich gezeigt, dass besonders in störverseuchten Umgebungen mit hohen HF-Feldern und/oder großen Strömen aufgrund dieser Störungen fälschlicherweise ein Kurzschlusszustand erkannt und der Schaltwandler abgeschaltet wird. Dies ist verständlicherweise unerwünscht, da es zu einem Ausfall der von dem Schaltwandler versorgten Geräte und Baugruppen kommt.

überstrom- oder Kurzschlussäuslöseschaltungen, auch solche, die während eines bestimmten Zeitraums, z. B. einer Taktperiode eines Pulsbreitenmodulators den Strom überwachen, sind nach dem Stand der Technik mehrfach bekannt geworden.

So zeigt die US 5 621 603 eine Stromversorgung für einen Elektromagneten mit Pulsbreitenmodulation und einen einzigen Zeitfenster für die Messung von Überstrom, wobei bei Überstromerkennung zunächst für die folgende Schaltperiode abgeregelt wird.

Die US 5 483 141 beschreibt eine Motorsteuerung mit einem Brückenumrichter für den 3-Phasen-Motor eines Kompressors. Da bei Überlast des Motors eine Strombegrenzung ohne Abschalten erfolgen soll, wird der Strom während der gesamten Einschaltzeit der Schalttransistoren überwacht. Dies ist mit der herkömmlichen Primärstrombegrenzung bei Schaltwandlern vergleichbar.

Aus der DE 34 41 403 A1 ist ein analoger Schutzschalter für Wechsel- oder Gleichstrom bekannt geworden, der fremdauslösbar oder bei Überstrom auslösbar ist.

Der geregelte Schaltwandler nach der EP 0 287 109 besitzt digitale Ansteuerschaltung mit einer Strombegrenzung, wobei Überstromzustände zu einem Abschalten führen.

Eine getaktete Stomversorgungsanordung ist aus der DE 19 730 220 bekannt. Eine Aufgabe der Erfindung liegt in der Schaffung eines Schaltwandlers, bei welchem ein rasches und sicheres Erkennen von Kurzschlusszuständen möglich ist.

Diese Aufgabe wird mit einem Verfahren der eingangs genannten Art gelöst, bei welchem erfindungsgemäß das Ergebnis des Vergleichs des Laststroms mit dem Maximalwert nur innerhalb eines Zeitfensters während mehrerer Taktperioden der Schaltimpulse berücksichtigt wird, wobei jedes Zeitfenster kürzer als die Einschaltdauer gewählt ist und innerhalb der Einschaltdauer der Schaltimpulse liegt.

Dank der Einführung mehrerer Zeitfenster, welche innerhalb der Einschaltdauer der Schaltimpulse liegen, kann die Fehlererkennung in Zeitbereiche gelegt werden, in welchen Störungen erfahrungsgemäß seltener auftreten, wobei durch die Wahl von Länge und Lage des Zeitfensters eine hohe Flexibilität gewährleistet ist, wobei der Einfluss von Störungen während des stromfreien Abschnittes jeder Taktperiode ausgeschlossen ist.

Eine weitere Verminderung des Störungseinflusses lässt sich dabei erreichen, wenn das Zeitfenster an den Beginn der Einschaltdauer gelegt wird.

Die Sicherheit des Erkennens von Kurzschlüssen lässt sich bedeutend erhöhen, falls die Vergleichsergebnisse über mehrere Taktperioden integriert werden, der erhaltene Integrationswert mit einem vorgebbaren Schwellwert verglichen wird und lediglich bei Überschrei- ... ben dieses Schwellwertes eine Beeinflussung von Schaltimpulsen erfolgt.

Die Verringerung des Laststromes im Kurzschlussfall kann einfach dadurch erreicht werden, dass die Beeinflussung der Schaltimpulse in deren Unterdrückung über eine vorgebbare Anzahl von Taktperioden besteht.

Die gestellte Aufgabe wird auch mit einem Schaltwandler der oben aufgezeigten Art gelöst, bei welchem erfindungsgemäß zwecks Auswertung des Laststroms lediglich innerhalb eines innerhalb der Einschaltdauer der Schaltimpulse liegendes Zeitfensters während mehrerer Taktperioden der Schaltimpulse zur Festlegung dieses Zeitfensters zumindest ein erstes Zeitglied vorgesehen ist

Mit Vorteil kann dabei vorgesehen sein, dass das erste Zeitglied an dem Beginn der Einschaltdauer der Schaltimpulse ausgelöst wird und ein Zeitfenster festlegt, das kürzer als oder gleich der Einschaltdauer ist.

Eine praxisgerechte Variante zeichnet sich dadurch aus, dass ein erster Komparator zum Vergleich des Laststroms mit einem ersten vorgebbaren Maximalwert während jeder Taktperiode innerhalb des ersten Zeitfensters vorgesehen ist, aus diesem Vergleich gewonnene Impulse einem Integrator zugeführt sind, dem Integrator zum Vergleich des Integrationswertes mit einem zweiten festsetzbaren Schwellwert ein zweiter Komparator nachgeschaltet ist, und das Ergebnis dieses Vergleichs zur Beeinflussung der Schaltimpulse herangezogen ist.

Vorteilhaft ist es auch, wenn ein drittes Zeitglied zum Rücksetzen des Integrators nach einer vorgebbaren Anzahl von Taktperioden vorgesehen ist. Dadurch werden Fehlauslösungen vermieden, falls nur sporadisch Kurzschlussereignisse festgestellt werden.

Bei einer zweckmäßigen Weiterbildung ist ein viertes Zeitglied vorgesehen, das eine Anzahl von Taktperioden festlegt, während welcher bei einem Kurzschluss- oder Überstromereignis Schaltimpulse unterdrückt werden.

Die Erfindung ist samt weiterer Vorteile im folgenden anhand beispielsweiser Ausführungsformen näher erläutert, die in der Zeichnung veranschaulicht sind. In dieser zeigen
- Fig. 1 ein Prinzipschaltbild eines Schaltwandlers nach dem Stand der Technik,
- Fig. 2 einen Teil einer Ansteuerschaltung nach dem Stand der Technik,
- Fig. 3 einen Teil einer Ansteuerschaltung eines erfindungsgemäßen Schaltwandlers, und
- Fig. 4 ein Diagramm zur Erläuterung des erfindungsgemäßen Verfahrens.

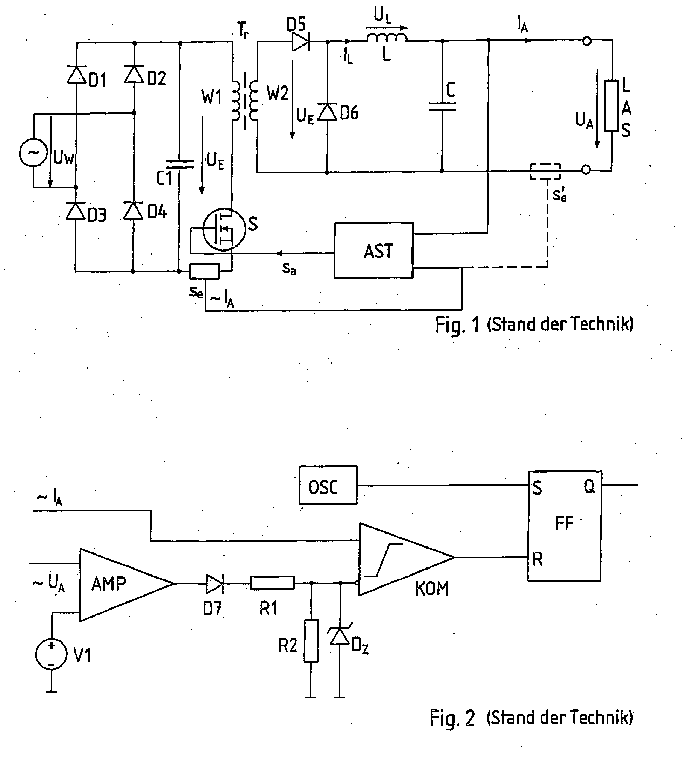

Fig.1 zeigt einen als Flusswandler ausgebildeten Schaltwandler, dessen Eingangsspannung U_{E} aus einer Wechselspannung Uw, z. B. einer Netzspannung, durch Gleichrichter mit Hilfe eines Gleichrichters D1, D2, D3, D4 und Glättung mittels eines Kondensators C1 gewonnen wird. Die Eingangsgleichspannung U_{E} kann über einen gesteuerten Schalter S, hier einem Feldeffekttransistor, an die Primärwicklung W1 eines Übertragers Tr gelegt werden. Sekundärseitig wird die Spannung einer Sekundärwicklung W2 mittels einer Diode D5 gleichgerichtet und über eine Drossel L einem Ausgangskondensator C2 zugeführt. In bekannter Weise ist weiters eine Freilaufdiode D6 vorgesehen. An der Ausgangsspannung U_{A} liegt eine zu speisende Last LAS.

Der Schalter S wird von einer Ansteuerschaltung AST angesteuert, welche im stationären Zustand einen Rechteckpuls mit bestimmtem Tastverhältnis liefert. Zur Regelung wird der Ansteuerschaltung die Ausgangsspannung U_{A} - oder ein Bruchteil derselben - zugeführt, und ein Stromsensor Se, z. B. ein Shunt, liefert ein dem Laststrom I_{A} proportionales Signal an die Ansteuerschaltung. Auf diese Weise kann in bekannter Weise auf konstante Ausgangsspannung oder auf konstanten Laststrom geregelt werden. Der Stromsensor Se kann z. B. wie gezeigt in der Primärseite des Übertragers Tr oder auch zusätzlich im Sekundärkreis als sekundärer Stromsensor Se' realisiert sein.

Fig. 2 zeigt in näherem Detail einen üblichen Pulsbreitenmodulator zur Erzeugung des Ansteuerpulses. Ein Oszillator OSC liefert ein - hier - festfrequentes Signal an den set-Eingang eines Flipflop FF. Einem Fehlerverstarker AMP ist einerseits der Istwert der Ausgangsspannung und andererseits eine Referenzspannung V1 zugeführt, wobei der Ausgang des Verstärkers AMP über eine Diode D7 und einen Widerstand R1 an einen invertierenden Eingang eines Komparators KOM gelegt ist, dessen anderem Eingang ein dem Laststrom I_{A} proportionales Signal zugeführt ist. Der invertierende Eingang ist über einen Widerstand R2 und - parallel zu diesem - eine Zenerdiode Dz mit Masse verbunden. Der Ausgang des Komparators KOM liegt an dem reset-Eingang des Flipflop FF. Weitere Einzelheiten, wie dem Fachmann geläufig, den Frequenzgang beeinflussende Bauteile, auch Gegenkopplungszweige, etc. sind zur Vereinfachung hier nicht gezeigt.

Der die Schaltfrequenz bestimmende Oszillator OSC schaltet den Ansteuerimpuls am reset-Eingang des Flipflop FF ein, wobei das Ausschalten entweder durch die fallende Flanke des Oszillators oder an dem Schnittpunkt des Regelsignals der Ausgangsspannung U_{A} mit dem Ist-Wert des Laststrom I_{A} erfolgt. Dabei können auch mehrere Takte völlig unterdrückt werden, wenn der Regeleingang auf Null gesetzt wird. Dies ist z. B. bei zu hoher Ausgangsspannung U_{A} der Fall oder bei zu hohem Laststrom I_{A}, wobei die Schwelle durch die Zenerdiode Dz bestimmt wird.

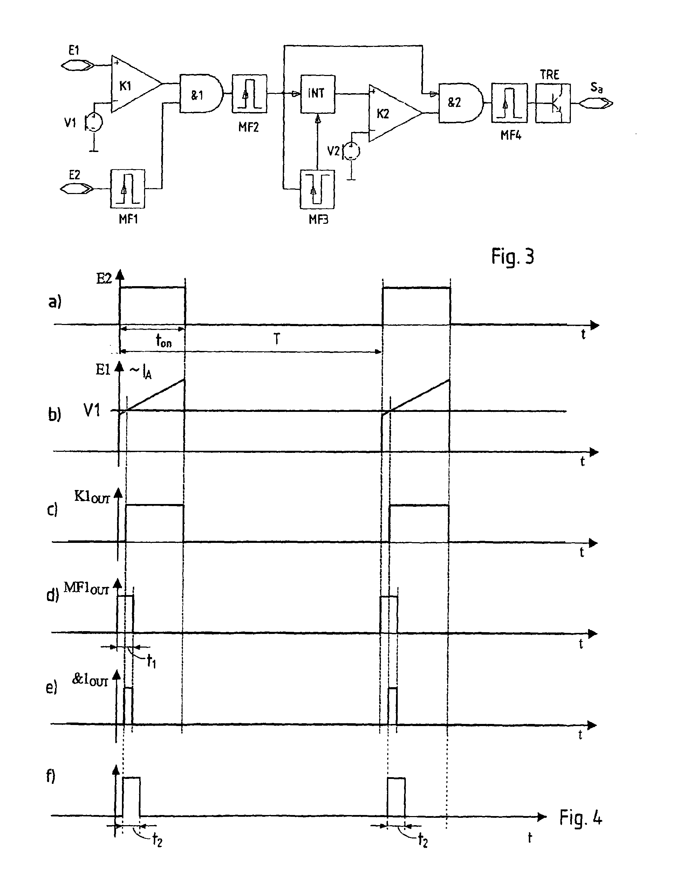

Fig. 3 zeigt einen ersten Komparator K1 zum Vergleich einer dem Laststrom I_{A} proportionalen Spannung E1 mit einem Referenz- oder Maximalwert V1, welcher den maximalen Laststrom vorgibt. Der Ausgang des Komparators K1 ist einem ersten Eingang eines UND-Gliedes &1 zugeführt, dessen zweiten Eingang die Ausgangsspannung E2 eines Pulsweitenmodulators gemäß z. B. Fig. 2, somit der Schalttakt, über ein erstes Zeitglied MF1 zugeführt sind.

Der Ausgang des UND-Gliedes &1 ist über ein zweites Zeitglied MF2 einem Integrator INT zugeführt und dessen Ausgang liegt an dem (nicht invertierenden) Eingang eines zweiten Komparators K2, an dessen zweiten (invertierenden) Eingang eine festsetzbare Referenzspannung V2 liegt, welche einem Schwellwert entspricht, mit dem das Integrationsergebnis verglichen wird. Zum Rücksetzen des Integrators K2 nach einer vorgebbaren Anzahl n von Taktperioden T ist ein drittes Zeitglied MF3 vorgesehen, dessen Eingang mit dem Ausgang des zweiten Zeitgliedes MF2 verbunden ist und dessen Ausgang zu einem Reset-Eingang des Integrators INT führt.

Den beiden Eingängen eines zweiten UND-Gliedes &2 ist einerseits der Takt am Ausgang des zweiten Zeitgliedes und andererseits der Ausgang des zweiten Komparators K2 zugeführt, und der Ausgang des UND-Gliedes &2 ist über ein viertes Zeitglied MF4 mit dem Eingang einer Treiberstufe TRE verbunden, welche das Ansteuersignal sₐ (siehe Fig. 1) für den Schalter S liefert.

Unter Bezugnahme nun auch auf Fig. 4 wird der Ablauf des erfindungsgemäßen Verfahrens erläutert. Das oberste Diagramm a) zeigt den Verlauf von E2, somit des Ausgangspulses des Pulsweitenmodulators, z. B. gemäß Fig. 2. Die Periodendauer des Pulses ist mit t bezeichnet, die Einschaltdauer mit t_{ON}. In dem Diagramm b darunter ist die Höhe der Referenzspannung V1 eingezeichnet, mit welcher die dem Laststrom I_{A} entsprechende Spannung E1 verglichen wird. Bei Überschreiten des Pegels V1 schaltet der Komparator K1 an seinem Ausgang auf "high", was in dem dritten Diagramm c) der Fig. 4 ersichtlich ist. Am Ende der Einschaltdauer t_{ON} springt der Ausgang des Komparators K1 wieder auf 0 bzw. "low".

Das Tastsignal E2 startet ein nicht retriggerbares Monoflop - das Zeitglied MF1 -, welches für die z. B. programmierbare Monoflopdauer t1 ein "high"-Signal ausgibt, dargestellt in dem Diagramm d) der Fig. 4. Durch die Zeit t1 ist ein Zeitfenster für die Kurzschlussüberprüfung definiert, das innerhalb der Einschaltdauer t_{ON} und außerdem am Beginn der Einschaltdauer liegt. Dadurch ist bereits gewährleistet, dass Störungen, die außerhalb der Einschaltdauer t_{ON} liegen, nicht als Kurzschlusszustände fehlinterpretiert werden können; ein Überstrom kann letztlich nur während der Einschaltdauer t_{ON} möglich sein. Die Verlegung des Zeitfensters t1 an den Beginn der Einschaltdauer hat den Sinn, die Eingreifmöglichkeit des Komparators K1 auf eine kurze Zeit am Anfang des Taktimpulses zu begrenzen, so dass zum einen eine erhöhte Störsicherheit gegeben ist und zum anderen dynamische Sättigungserscheinungen im Leistungsübertrager bei Last- oder Eingangsspannungsänderungen nicht als Kurzschluss interpretiert werden können. Außerdem wird auf diese Weise auch der Einfluss der Höhe der Eingangsspannung auf den Kurzschlussstrom minimiert.

Die Ausgänge des Komparators K1 und des Monoflops MF1 werden in dem ersten UND-Glied &1 verknüpft, das Ergebnis dieser Verknüpfung ist in Diagramm e) der Fig. 4 dargestellt. Um die Störsicherheit zu erhöhen, sollen Impulse, wie in Fig. 4 gezeigt, über eine bestimmte Zeit oder Taktanzahl aufintegriert werden. Da jedoch die Dauer der Impulse in Diagramm e) nicht konstant ist, werden sie noch in einem zweiten Monoflop MF2 auf eine einheitliche Länge bzw. Zeitdauer t2 gebracht, was in Diagramm f) der Fig. 4 gezeigt ist.

Wenn somit eine Anzahl von Impulsen gemäß Diagramm f) auftritt, was einem mehrmaligen Überschreiten der Referenzspannung V1 am Komparator K1 entspricht, so werden diese Impulse in dem Integrator INT hochintegriert, bis sie den vorgegebenen Referenzwert V2 erreichen Ist dieser Pegel erreicht, schaltet das UND-Glied &2 den Takt weiter. Somit lässt erst das Hochintegrieren vieler Kurzschlusserkennungen eine Wirkung der Schaltung zu. Der Integrator INT wird durch das retriggerbare Monoflop MF3 wieder auf Null zurückgesetzt, wobei es so geschalten ist, dass der Integrator INT rückgesetzt wird, sobald über die frei programmierbare Monoflop-Zeit t3 kein Kurzschluss festgestellt wird.

Die Ausgangsimpulse des UND-Gliedes &2 lösen das Monoflop bzw. Zeitglied MF4 aus, wobei die entsprechende Zeit t4 eine Anzahl von Taktperioden festlegt, während welcher bei einem Kurzschluss- oder Überstromereignis Schaltimpulse unterdrückt werden. Während der Zeit t4 werden somit die Ansteuerimpulse, d. h. das Ansteuersignal sₐ für den gesteuerten Schalter S auf Null gesetzt.

Bei der Erfindung kann auf mit hohen Verlusten behaftete Sekundärshunts oder auf einen teuren sekundären Stromwandler verzichtet werden, da primär eingegriffen wird. Die Kosten für hier verwendete logische Gatter und Monoflops sind durch den Einsatz von Standard-CMOS-ICs gering und diese Bauteile nehmen auch nur wenig Strom auf. Die Verwendung von Zeitfenstern und die Anwendung einer Integration erhöhen die Störsicherheit erheblich. Die Integrationskonstante des Integrators INT kann auch so gewählt werden, dass im Kurzschlussfall für eine bestimmte Zeit ein hoher Strom fließt, der zur Auslösung von Sicherungsautomaten etc. herangezogen werden kann. Die Eingangsspannung hat auf die Höhe des Kurzschlussstroms kaum einen Einfluss, und der Kurzschlussstrom wird auch bei Kurzschlussimpedanz Null begrenzt. Ein im allgemein labiler, direkter Eingriff auf die Schaltfrequenz des Schaltreglers ist hier nicht erforderlich und die Spannungs-Strom-Kennlinie eines Schaltnetzteils wird nur im extremen Überlast- und Kurzschlussfall verändert.

Die insbesondere in Fig. 3 gezeigte Ausführung hat sich als besonders günstig erwiesen, doch könnte man die Schaltung je nach Bedürfnissen auch vereinfachen. Beispielsweise könnte der Integrator INT mit dem nachgeschalteten Komparator K2 entfallen. Prinzipiell könnte, ob mit oder ohne Integrator, auch das Zeitglied MF2 weggelassen werden, und bei Wegfall des Integrators INT entfällt auch das UND-Glied &2.

## Patentansprüche

1. Verfahren zum Erkennen und/oder Begrenzen von Kurzschluss- oder Überstromzuständen eines Schaltwandlers, bei welchem der Laststrom oder eine diesem proportionale Größe gemessen und mit einem vorgebbaren Maximalwert verglichen wird und das Ergebnis dieses Vergleichs zur Beeinflussung der Schaltimpulse herangezogen wird,
**dadurch gekennzeichnet, dass**
der Vergleich des Laststroms mit dem Maximalwert nur innerhalb eines Zeitfenster (t1) der Schaltimpulse berücksichtigt wird, wobei jedes Zeitfenster kürzer als die Einschaltdauer gewählt ist und innerhalb der Einschaltdauer (t_{ON}) der Schaltimpulse liegt und an den Beginn der Einschaltdauer gelegt ist und die Vergleichsergebnisse mehrerer Taktperioden berücksichtigt werden.

2. Verfahren nach Anspruch 1, **dadurch gekennzeichnet, dass** die Vergleichsergebnisse über mehrere Taktperioden integriert werden, der erhaltene Integrationswert mit einem vorgebbaren Schwellwert verglichen wird und lediglich bei Überschreiben dieses Schwellwertes eine Beeinflussung von Schaltimpulsen erfolgt.

3. Verfahren nach Ansprüche 1 oder 2, **dadurch gekennzeichnet, dass** die Beeinflussung der Schaltimpulse in deren Unterdrückung über eine vorgebbare Anzahl von Taktperioden besteht.

4. Schaltwandler zur Umschaltung einer Eingangsgleichspannung (UE) in eine Ausgangsspannung (UA), bei welcher die Eingangsspannung über zumindest einen, von einer Ansteuerschaltung (AST) mit Schaltimpulsen angesteuerten Schalter (S) an eine Induktivität (Tr) schaltbar ist, und der Schaltwandler dazu eingerichtet ist, bei Überschreiten eines vorgebbaren Maximalwertes des Laststroms die Schaltimpulse im Sinne einer Laststromversorgung zu beeinflussen,
**dadurch gekennzeichnet, dass**
zwecks Auswertung des Laststroms lediglich innerhalb eines innerhalb der Einschaltdauer (tON) der Schaltimpulse liegendes Zeitfenster (t1) zur Festlegung dieses Zeitfensters zumindest ein erstes Zeitglied (MF1) vorgesehen ist und das erste Zeitglied (MF1) an dem Beginn der Einschaltdauer (tON) der Schaltimpulse ausgelöst wird und ein Zeitfenster (t1) festlegt, das kürzer als der Einschaltdauer ist darüber hinaus eine Schattung (INT) zum Vergleich des Lastroms mit einem vorgebbaren Maximalwert vorgesehen ist welche die Zeitfenster mehrerer Taktperiode berücksichtigt.

5. Schaltwandler nach Anspruch 4, **dadurch gekennzeichnet, dass** ein erster Komparator (K1) zum Vergleich des Laststroms mit einem ersten vorgebbaren Maximalwert (V1) während jeder Taktperiode innerhalb des ersten Zeitfensters (t1) vorgesehen ist, aus diesem Vergleich gewonnene Impulse einem Integrator (INT) zugeführt sind, dem Integrator zum Vergleich des Integratioruwertes mit einem festsetzbaren Schwellwert (V2) ein zweiter Komparator (K2) nachgeschaltet ist, und das Ergebnis dieses Vergleichs zur Beeinflussung der Schaltimpulse herangezogen ist.

6. Schaltwandler nach Anspruch 5, **dadurch gekennzeichnet, dass** ein drittes Zeitglied (MF3) zum Rücksetzen des Integrators (INT) nach einer vorgebbaren Anzahl (n) von Taktperioden (T) vorgesehen ist

7. Schaltwandler nach einem der Ansprüche 4 bis 6, **dadurch gekennzeichnet, dass** ein viertes Zeitglied (MF4) vorgesehen ist, das eine Anzahl von Taktperioden festlegt, während welcher bei einem Kurzschluss- oder Überstromereignis Schaltimpulse unterdrückt werden.

## Claims

1. Method for recognizing and or limiting short-circuit and overcurrent states of a switching converter, in which the load current or a variable proportional to said current is measured and compared with a predetermined maximum value and the result of this comparison is included for influencing the switching pulses.
**characterised in that**
the comparison of the load current with the maximum value is only taken into account within a time window (t1) of the switching pulses, with each time window being selected to be shorter than the switch-on time and lying within the switch-on time (tON) of the switching pulses and being placed at the beginning of the switch-on time and the comparison results of a number of clock periods being considered.

2. Method in accordance with claim 1, **characterised in that** the comparison results are integrated over a number of clock periods, the integration value obtained is compared to a predeterminable threshold value and only when this threshold value is exceeded are the switching pulses influenced.

3. Method in accordance with claim 1 or 2, **characterised in that** the influencing of the switching pulses consists of suppressing them over a predeterminable number of clock periods.

4. Switching converter for converting an input DC voltage (UE) into an output voltage (UA) in which the input DC voltage is able to be switched to an inductance (Tr) via at least one switch (S) controlled by switching pulses by a control circuit (AST), and the switching converter is configured, when a predetermined maximum value of the load current is exceeded, to influence the switching pulses in the sense of a load current supply,
**characterised in that**
for the purpose of evaluating the load current merely within a time window lying within the switch-on time (tON) of the switching pulses, to determine this time window at least one first timing element (MF1) is provided and the first timing element (MF1) is triggered at the beginning of the switch-on time (tON) of the switching pulses and defines a time window (t1) which is shorter than the switch-on time, in addition a circuit (INT) for comparing the load current with a predeterminable maximum value is provided which takes into account the clock periods of a number of time windows.

5. Switching converter according to claim 4, **characterised in that** a first comparator (K1) for comparing the load current during each clock period within a first time window (t1) is provided, pulses obtained from this comparison are fed to an integrator (INT), a second comparator (K2) is connected downstream from the integrator for comparing the integration value with a definable threshold value V2, and the result of this comparison is included for influencing the switching pulses.

6. Switching converter according to claim 5, **characterised in that** a third timing element (MF3) is provided for resetting the integrator (INT) after a predeterminable number of clock periods (T).

7. Switching converter according to claim 5, **characterised in that** a fourth timing element (MF4) is provided which defines a number of clock periods during which switching pulses are suppressed during a short circuit or overcurrent event.

## Revendications

1. Procédé de détection et/ou de limitation d'états de court-circuit ou de surintensité d'un convertisseur à commutation, dans lequel on mesure le courant de charge ou une grandeur qui lui est proportionnelle et on le compare à une valeur maximum pouvant être prescrite et on tire parti du résultat de cette comparaison pour influer sur les impulsions de commutation,
**caractérisé en ce que**
on ne tient compte de la comparaison du courant de charge à la valeur maximum que dans une fenêtre ( t1 ) de temps des impulsions de commutation, chaque fenêtre de temps étant choisie plus courte que la durée de mise en circuit et se trouvant à l'intérieur de la durée ( tON ) d'application des impulsions de commutation et étant mise au début de la durée de mise en circuit et on tient compte des résultats de la comparaison de plusieurs périodes d'horloge.

2. Procédé suivant la revendication 1, **caractérisé en ce que** l'on intègre les résultats de la comparaison sur plusieurs périodes d'horloge, on compare la valeur d'intégration obtenue à une valeur de seuil pouvant être prescrite et on influe sur les impulsions de commutation seulement si cette valeur de seuil est dépassée.

3. Procédé suivant la revendication 1 ou 2, **caractérisé en ce que** influer sur les impulsions de commutation consiste à les supprimer sur un nombre pouvant être prescrit de périodes d'horloge.

4. Convertisseur à commutation pour la commutation d'une tension ( UE ) continue d'entrée en une tension ( UA ) de sortie, dans lequel la tension d'entrée peut être appliquée à une inductance ( Tr ) par au moins un commutateur ( S ) commandé par un circuit ( AST ) de commande ayant des impulsions de commutation et le convertisseur à commutation étant tel que, lorsqu'une valeur maximum pouvant être prescrite du courant de charge est dépassée, les impulsions de commutation sont influencées au sens d'une alimentation en un courant de charge,
**caractérisé en ce que**
en vue de l'évaluation du courant de charge, seulement à l'intérieur d'une fenêtre ( t1 ) de temps se trouvant à l'intérieur d'une durée ( tON ) d'application des impulsions de commutation, il est prévu pour la fixation de cette fenêtre de temps au moins un premier élément ( MF1 ) temporisateur et le premier élément ( MF1 ) temporisateur est déclenché au début de la durée ( tON ) d'application des impulsions de commutation et fixe une fenêtre ( t1 ) de temps, qui est plus courte que la durée de mise en circuit, en outre, un circuit ( INT ) est prévu pour comparer le courant de charge à une valeur maximum pouvant être prescrite, laquelle fenêtre de temps tient compte de plusieurs périodes d'horloge.

5. Convertisseur à commutation suivant la revendication 4, **caractérisé en ce qu'**il est prévu un premier comparateur ( K1 ) pour comparer le courant de charge à une première valeur ( V1 ) maximum pouvant être prescrite pendant chaque période d'horloge dans la première fenêtre ( t1 ) de temps, des impulsions obtenus à partir de cette comparaison étant envoyées à un intégrateur ( INT ), un deuxième comparateur ( K2 ) étant monté en aval de l'intégrateur pour la comparaison de la valeur d'intégration à une valeur ( V2 ) de seuil pouvant être fixée et le résultat de cette comparaison étant mis à profit pour influer sur les impulsions de commutation.

6. Convertisseur à commutation suivant la revendication ( MF3 ) temporisateur pour remettre l'intégrateur ( INT ) à l'état initial après un nombre ( n ) pouvant être prescrit de périodes ( T ) d'horloge.

7. Convertisseur à commutation suivant l'une des revendications 4 à 6, **caractérisé en ce qu'**il est prévu un quatrième élément ( MF4 ) temporisateur, qui fixe un nombre de périodes d'horloge pendant lesquelles des impulsions de commutation sont supprimées s'il se produit un événement de court-circuit ou de surintensité.
